# EUROPEAN PATENT SPECIFICATION

(11) **EP 1 320 998 B1**
(45) Date of publication and mention of the grant of the patent: **06.05.2004**
(21) Application number: 01971847.7
(22) Date of filing: 02.08.2001
(51) Int. Cl.: H04Q 3/00, H04M 7/00

(54) **CALL LOOPING PREVENTION**
VERHINDERUNG VON GESPRÄCHSUMWEGLENKUNG
PREVENTION DE BOUCLE D'APPELS

(30) Priority: 05.09.2000 GB 0021710
(43) Date of publication of application: 25.06.2003
(73) Proprietor: Telefonaktiebolaget LM Ericsson (publ), 16483 Stockholm (SE)
(72) Inventor: RANTANEN, Kimmo, FIN-01360 Vantaa (FI); HEINONEN, Veli-Pekka, FIN-02100 Espoo (FI); GARCIA-MARTIN, Miguel-Angel, FIN-02420 Jorvas (FI)
(74) Representative: Mohsler, Gabriele
(86) International application number: PCT/EP2001/008923
(87) International publication number: WO 2002/021857

(56) References cited:
- WO-A-00/42760
- WO-A-99/29124
- SALMAN M A ET AL: "THE FUTURE OF IP-PSTN INTERWORKING" GB,LONDON: IBTE, 24 August 1999 (1999-08-24), pages 163-167, XP000847190
- ANQUETIL L -P ET AL: "MEDIA GATEWAY CONTROL PROTOCOL AND VOICE OVER IP GATEWAYS. MGCP AND VOIP GATEWAYS WILL OFFER SEAMLESS INTERWORKING OF NEW VOIP NETWORKS WITH TODAY'S TELEPHONE NETWORKS" ELECTRICAL COMMUNICATION,ALCATEL. BRUSSELS,BE, 1 April 1999 (1999-04-01), pages 151-157, XP000830045 ISSN: 0013-4252

## Description

### Field of the Invention

The present invention relates to the prevention of call looping in telecommunication networks.

### Background to the invention

The Session Initiation Protocol (SIP), as specified in the IETF document RFC2543, has recently been proposed as a signalling protocol for creating, modifying and terminating sessions with one or more participants across the Internet. In particular, SIP is intended to handle connections for Voice over IP (VoIP) calls.

It is desirable (or even essential) that networks such as Public Switched Telephone Networks (PSTNs) using SS7 signalling and Internet Protocol (IP) networks using SIP signalling should be interoperable. In practice, this is achieved using so-called Media Gateways which provide an interface between networks at the bearer level. These are controlled by Media Gateway Controllers (MGCs) which provide an interface at the call control level. This is described in "The future of IP-PSTN interworking" (XP 847190).

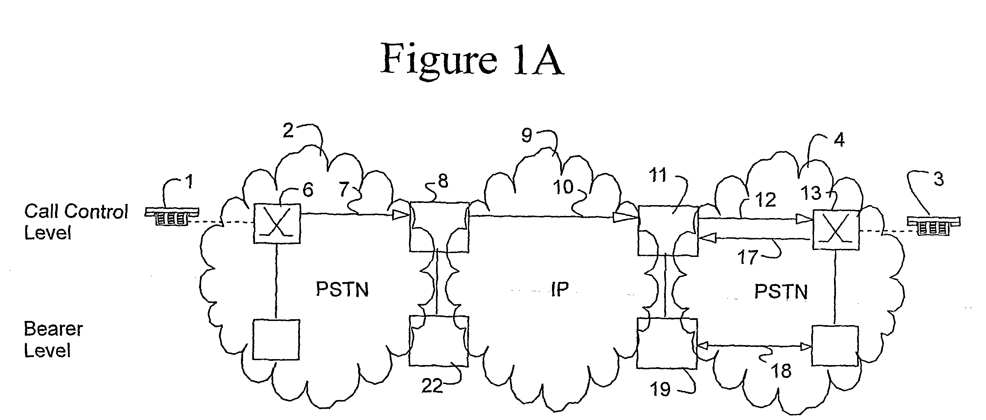

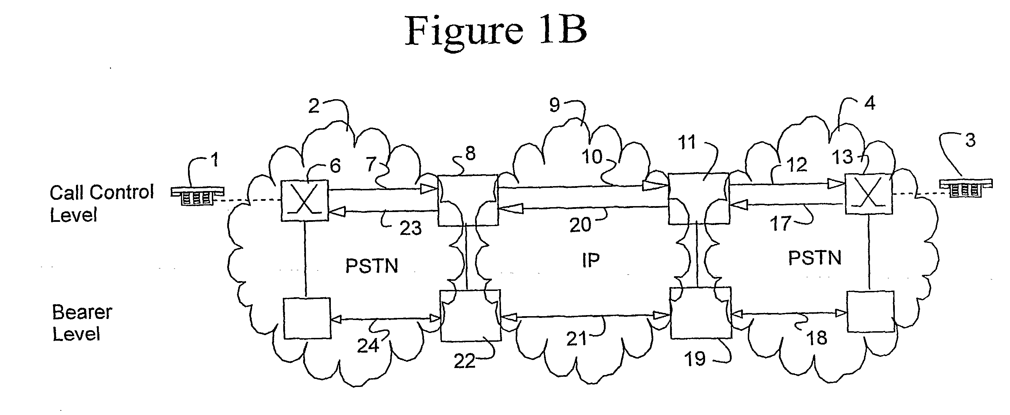

An example of such interoperable networks is shown in Figure 1. Suppose a first subscriber 1 to a first PSTN 2 requests a call to a second subscriber 3 in a second PSTN 4, as shown in Figure lA. The first subscriber indicates to his local exchange 6, for example by dialling a telephone number, that a call is to be requested. The local exchange determines what routing should be used, and generates an Initial Address Message (IAM) 7 to initiate the call. The IAM contains information about the requested call, including the B-number (the telephone number of the called second subscriber 3).

The IAM is sent by the local exchange 6 to a first Media Gateway Controller (MGC) 8 at the interface between the first PSTN 2 and an IP network 9. The first MGC 8 generates a SIP set-up message 10 which is sent via the IP network 9 to a second MGC 11 at the interface between the IP network 9 and the second PSTN 4. The SIP set-up message 10 contains routing information including the SIP address of the destination of the call. The SIP address may be of the form "sip:user@host" and is derived at the MGC 8 using the B-number contained in the IAM 7 (the MGC 8 may contact a SIP server for this purpose).

When the second MGC 11 receives the SIP set-up message 10, it generates a new IAM 12. The SIP address from the SIP set-up message is mapped back to the B-number in the IAM 12, which is sent via the second PSTN 4 to the local exchange 13 of the second subscriber 3. Upon receiving a setup message, each exchange/MGC reserves resources (CIC, UDP port, etc) for the requested connection.

The local exchange 13 informs the second subscriber 3 (e.g. by a telephone ringing) that a call has been requested. If the second subscriber 3 accepts the call, an Address Complete Message (ACM) 17 is returned from the local exchange 13 to the second MGC 11. When the second MGC 11 receives the ACM 17, it causes an associated second Media Gateway (MG) 19 at the bearer level to establish a connection 18 to the local exchange 13. At this stage, therefore, there is a connection from the second MG 19 to the second subscriber 3.

The completion of the establishment of the call is shown in Figure 1B. Upon receipt of the ACM 17, as well as causing the establishment of the connection 18 with the local exchange 13, the second MGC 11 also sends a SIP acceptance message 20 to the first MGC 8. The MGC causes an associated first MG 22 to establish a "connection" 21 to the second MG 19, and also sends an ACM 23 to the first subscriber's local exchange 6. Upon receipt of the ACM 23 from the first MGC 8, the first subscriber's local exchange 6 establishes a connection 24 to the first MG. There is now a complete path at the bearer level for data to pass between the first subscriber 1 and second subscriber 3, and a call has been established.

It should be understood that the first and second subscribers can be "blind" to the IP network: as far as they are concerned a call is connected from one PSTN to a second PSTN, and they do not choose whether or not an IP network is used.

It is desirable that MGCs should be able to deal with common telephone services such as call forwarding. Under the current proposals, call forwarding is possible across interconnected PSTN and IP networks. However, there is a danger that without any special measures a signalling loop can be initiated if the first subscriber 1 forwards calls to the second subscriber 3, whilst at the same time calls to the second subscriber 3 are forwarded back to the first subscriber 1.

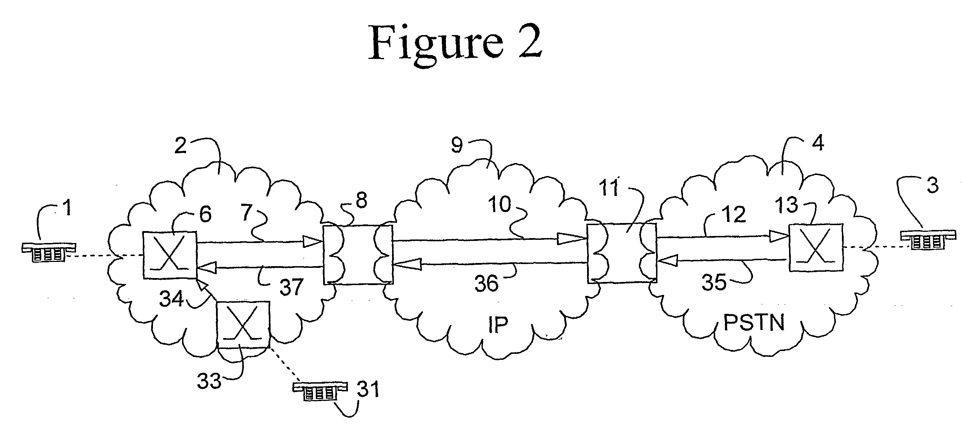

Figure 2 illustrates schematically how such a loop might arise in the network of Figure 1. Like reference numerals to those used in Figure 1 denote like components. Figure 2 shows the behaviour of signalling messages in the call control level. The connections in the bearer level are never established and are therefore not shown in the figure. The first subscriber 1 leaves instructions with the operator of the first PSTN that calls directed to him are to be forwarded to the second subscriber 2. The second subscriber 2 leaves similar instructions with the operator of the second PSTN 4 that calls to him are to be forwarded to the first subscriber 1. This situation may arise, for example, if the telephone number of the first subscriber is a person's home telephone number, and the telephone number of the second subscriber is the same person's work telephone number. It will be understood that one or both of the PSTN networks may be replaced by a PLMN cellular telecommunications network.

Suppose a third subscriber 31 to (for example) the first PSTN 2 requests a call to the first subscriber 1. His local exchange 33 generates an IAM 34, and sends it to the first subscriber's local exchange 6. The local exchange 6 has instructions to forward the call, so sends an IAM 7 to the first MGC 8, and signalling messages follow the route described above with reference to Figure 1, until the IAM 12 is received by the second subscriber's local exchange 13. Here, there are again instructions to forward the call, so rather than an ACM being returned to the second MGC 11, the local exchange 13 forwards an IAM 35 to the second MGC 11. Of course, the IAM may be forwarded to a different MGC (not shown), but in this example the return route is shown through the same nodes for the sake of simplicity.

The second MGC 11 then sends a SIP set-up message, containing information from the received IAM 35, to the first MGC 8. This then sends an IAM 37 to the first subscriber's local exchange. This local exchange has call forwarding information, and sends an IAM 7 to the first MGC 8 as before. A signalling loop is thus created consuming ever increasing resources (CICs, UDP ports).

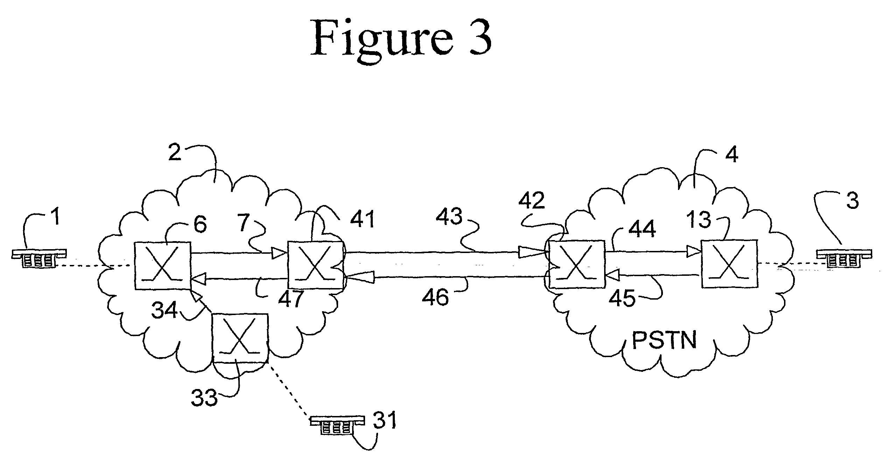

In networks using signalling based solely on ISUP, this looping can be prevented by the use of a redirection counter, which is incremented by one each time a call is forwarded. Figure 3 shows such a network. A first subscriber 1 to a first PSTN 2 has call forwarding set up to a second subscriber 3 to a second PSTN 4, and vice versa, as in Figure 2. However, this time the signalling messages do not go through an IP network, but via third and fourth "gateway" exchanges 41, 42.

If a third subscriber 31 requests a call to the first subscriber 1, as in Figure 2, an IAM 34 is sent by his local exchange 33 to the first subscriber's local exchange 6, as before. The local exchange 6 has instructions to forward the call and sends an IAM to the third exchange 41. The third exchange sends an IAM 43 to the fourth exchange 42 in the second PSTN 4, which in turn sends an IAM 44 to the second subscriber's local exchange 13. Here the call forwarding instructions cause LAMs 45, 46, 47 to be sent back between the exchanges, eventually reaching the first subscriber's local exchange 6, and the signalling loop is set up, as before. The reason the loop cannot go on for ever is that each IAM contains a parameter called a redirection counter which is initially set to some predefined value, and every time one of the local exchanges 6, 13, redirects an IAM message, this redirection counter is decremented by one. When the redirection counter reaches zero, this is detected by one of the exchanges 6, 13, 41, 42 and all call setup signalling is terminated. The originating exchange 31 may be notified of the termination by a RELease message (Exchange routing error).

Returning now to Figure 2, SIP (RFC 2543) does not include any corresponding protection mechanism against a redirection loop. The redirection counter in the IAM 5 going in to the first MGC 8 is not transferred to the redirection counter in the IAM 12 coming out of the second MGC 11, so the signalling messages run round unchecked consuming ever greater resources.

A problem similar to that of a redirection loop can occur in a network due to an error in the routing of the call. Rather than the signalling information travelling by the most direct route from the first subscriber's local exchange 6 to the second subscriber's local exchange 13, it may happen that the signalling goes via unnecessary exchanges (not shown) in each PSTN 2, 4, and possibly even through extra IP networks and MGCs.

In networks using signalling based solely on ISUP, this looping can be prevented by the use of a hop counter. The hop counter is a parameter to be found in all IAMs sent by the PSTN exchanges. The initial value, in the first IAM 7 sent by the first subscriber's local exchange 6, is determined by the number of "hops" expected for the signalling information to reach the second subscriber's local exchange 13. Each time one of the exchanges 6, 13, 41, 42 receives an IAM and forwards a new IAM to the next exchange, the value of the hop counter is decreased by one. If there are too many hops - i.e. something has gone wrong with the routing - the hop counter will eventually reach zero. This is detected by one of the exchanges and signalling is terminated.

Referring back to the call forwarding loop shown in Figure 3, it will be understood that every time a call is redirected (i.e. the redirection counter is decremented by one), the hop counter must be reset. If this did not happen, then the signalling for legitimately forwarded calls which have not been incorrectly routed and which are not forming a loop might be terminated due to the signalling performing too many hops.

### Summary of the Invention

According to a first aspect of the present invention there is provided a method of transferring signalling information from an SS7 signalling network to a packet switched signalling network using SIP signalling, the method comprising:
receiving an ISUP Initial Address Message (IAM) from the SS7 network at a Media Gateway Controller (MGC), the IAM containing a hop counter and/or a redirection counter; and
generating a SIP set-up message at the MGC including mapping the hop counter and/or redirection counter into the SIP set-up message.

Preferably, the IAM contains both a hop counter and a redirection counter and both are mapped to fields of the SIP set-up message. The counters may be mapped individually into fields of the SIP setup message, or the entire IAM may be mapped (tunnelled) into the SIP setup message.

According to a second aspect of the present invention there is provided a method of transferring signalling information from a packet switched signalling network using SIP signalling to an SS7 signalling network through a Media Gateway Controller (MGC), the method comprising:
receiving a SIP set-up message from the packet switched signalling network at the MGC, the SIP set-up message containing a hop counter and/or a redirection counter; and
generating an IAM for the SS7 network at the MGC, wherein said hop counter and/or redirection counter in the IAM are mapped from the SIP set-up message.

In a preferred embodiment the SS7 signalling network forms part of a Public Switched Telephone Network (PSTN) and the SIP signalling network comprises an IP network.

According to a third aspect of the present invention there is provided a Media Gateway Controller (MGC) for transferring data between an SS7 signalling network and a packet switched signalling network using SIP signalling, comprising means for mapping a hop counter and/or redirection counter between an Initial Address Message of the SS7 network and a SIP set-up message of the packet switched signalling network.

According to a fourth aspect of the present invention there is provided a telecommunications network comprising:
a first PSTN;
a second PSTN;
an IP network in communication with the first PSTN and to the second PSTN;
a first MGC at the interface between the first PSTN and the IP network; and
a second MGC at the interface between the second PSTN and the IP network,
wherein
the first and second MGCs comprise means for mapping a hop counter and/or redirection counter between an IAM of the first PSTN and a SIP set-up message of the IP network, and the first and second PSTNs comprise means for cancelling a call setup process when the hop counter reaches zero or the redirection counter exceeds a predefined value.

### Brief Description of the Drawings

Figure 1A and 1B show stages in setting up a call between two subscribers to PSTNs, where some of the signalling takes place using SIP;
Figure 2 shows a signalling loop set up in a network including two PSTNs and an IP network;
Figure 3 shows a network including two PSTNs in which all signalling is performed using ISUP; and
Figure 4 illustrates signalling in a network including one PSTN and an IP network.

### Detailed Description of Certain Embodiments

The use of IP networks to carry signalling information and the creation of signalling loops has been described above with reference to Figures 1A and 1B. Figure 2 has also been described as showing a network in which signalling between two circuit switched Public Switched Telephone Networks (PSTNs) 2, 4 takes place through a packet switched IP network 9. The IP network 4 contains first and second Media Gateway Controllers (MGCs) 8, 11 which allow the transfer of signalling information between the PSTNs 2, 4 and the IP network 9.

When a call is initiated to a subscriber 1 to the first PSTN 2 (e.g. by subscriber 31), and that subscriber 1 has forwarded his calls to the subscriber 3, an Initial Address Message (IAM) 7 is generated by his local exchange 6 and is sent to the first MGC 8 as described in the background to the invention above. The IAM contains the identity (A-number) of the subscriber 1, and identifies the telephone number to which he wishes to connect (B-number). Two further pieces of information contained in the IAM 7 are a hop counter and a redirection counter. As explained in the background to the invention above, the redirection counter is increased by one at each redirection stage in the SS7 network, whilst the hop counter is decreased by 1 at each forwarding exchange (with the hop counter being reset at each redirection stage). Upon forwarding of the call at the exchange 6, the redirection counter is decreased by 1 and the hop counter is reset to its initial value.

The first MGC 8 at the interface between the first PSTN 2 and the IP network 9 enables information contained in the IAM 7 to be transferred to a suitable format to allow the information to be forwarded through the IP network 9. If the SIP protocol is to be used in the IP network 9, a SIP set-up message 10 will be required. The SIP set-up message will contain various fields, to which can be mapped information from the IAM 7 (the IAM may also be tunnelled over the IP network using the SIP protocol).

In accordance with preferred embodiments of the invention, the SIP set-up message 10 contains a loop protection header, including two independent fields. The value of the hop counter in the IAM 7 is mapped to one of these fields, and the value of the redirection counter is mapped to the other of these fields.

The SIP set-up message is sent through the IP network to the second MGC 5. At the second MGC 5, another IAM 12 is generated to be sent to the second subscriber's local exchange 13. The values of the two independent fields in the loop protection header in the SIP set-up message 10 are mapped to the hop counter and re-direction counter in the new IAM 12. Thus, although a new IAM has been set up, the information regarding the number of "hops" through PSTN nodes and re-direction stages has not been lost.

In the event that the subscriber 3 has instructed that his calls be forwarded to the subscriber 1, the call setup process is re-routed back towards the first PSTN subscriber 1. The redirection counter of IAM 35 will be equal to the redirection counter of IAM 12 plus one, and the hop counter is again reset. The value of the redirection counter and hop counter of the IAM 35 will be copied to the SIP set-up message 36 for transport across the IP network 9, and subsequently included in the IAM 37 returning to the first subscriber's local exchange 6. As call forwarding for the subscriber 1 remains active, the redirection counter will again be increased by one and the hop counter reset before being transferred to the next IAM to be sent to the first MGC 8. Eventually the redirection counter will reach a predefined maximum value and the call setup process cancelled by one of the PSTN nodes. In the event of erroneous routing, the hop counter may reach zero before being reset whereupon this state will be detected by a PSTN node and the call setup process cancelled.

It will be appreciated that the checking of the hop counter or redirection counter need not be performed by PSTN node. The checking can be performed by the first MGC 8 at the stage at which the counter is mapped to one of the fields of the loop protection header of the SIP set-up message, or when these fields are mapped to a hop counter and redirection counter by the MGC 11. The hop counter may or may not be decremented when passing through a MGC.

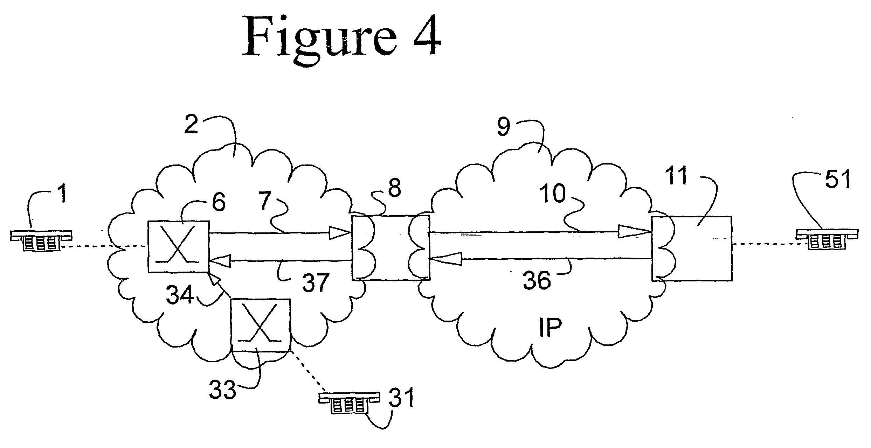

Figure 4 shows another example of a signalling network in which the present invention could be used. It is similar to the network shown in Figure 2, except that a second subscriber 51 is connected directly to an IP signalling network using SIP (via the second MGC 11) rather than via a PSTN. Call forwarding can be implemented by the first MGC 11 in place of a local exchange, with the redirection counter being incremented (and the hop counter reset) upon forwarding by the MGC 11. Looping problems are avoided as described above.

## Claims

1. A method of transferring signalling information from an SS7 signalling network to a packet switched signalling network using SIP signalling, the method comprising:
receiving an ISUP Initial Address Message (IAM) from the SS7 network at a Media Gateway Controller (MGC), the IAM containing a hop counter and/or a redirection counter; and
generating a SIP set-up message at the MGC including mapping the hop counter and/or redirection counter into the SIP set-up message.

2. A method according to claim 1, wherein the hop counter and/or redirection counter are individually mapped to respective fields of the SIP setup message.

3. A method according to claim 1, wherein the IAM message is encapsulated into an SIP message for tunnelling across the packet switched signalling network.

4. A method of transferring signalling information from a packet switched signalling network using SIP signalling to an SS7 signalling network through a Media Gateway Controller (MGC), the method comprising:
receiving a SIP set-up message from the packet switched signalling network at the MGC, the SIP set-up message containing a hop counter and/or a redirection counter; and
generating an IAM for the SS7 network at the MGC, wherein said hop counter and/or redirection counter in the IAM are mapped from the SIP set-up message.

5. A telecommunications network comprising:
a first PSTN;
a second PSTN;
an IP network in communication with the first PSTN and to the second PSTN;
a first MGC at the interface between the first PSTN and the IP network; and
a second MGC at the interface between the second PSTN and the IP network,
wherein
the first and second MGCs comprise means for mapping a hop counter and/or redirection counter between an IAM of the first PSTN and a SIP set-up message of the IP network, and the first and second PSTNs comprise means for cancelling a call setup process when the hop counter reaches zero or the redirection counter reaches a predefined value.

6. A method as claimed in any one of the preceding claims, wherein the SS7 signalling network forms part of a Public Switched Telephone Network (PSTN) and the SIP signalling network comprises an IP network.

7. A Media Gateway Controller (MGC) for transferring data between an SS7 signalling network and a packet switched signalling network using SIP signalling, comprising means for mapping a hop counter and/or redirection counter between an Initial Address Message of the SS7 network and a SIP set-up message of the packet switched signalling network.

## Patentansprüche

1. Verfahren zum Übertragen von Signalisierinformationen von einem Signalisierungsnetz SS7 an ein paketvermitteltes Signalisierungsnetz, das eine SIP-Signalisierung verwendet, umfassend:
Empfangen einer ISUP-Belegungsnachricht (Initial Address Message - IAM) von dem Signalisierungsnetz SS7 an einem Medien-Gateway-Controller (MGC), wobei die IAM einen Hop-Zähler und/oder einen Umleitungszähler aufweist; und
Erzeugen einer SIP-Setup-Nachricht an dem MGC einschließlich Abbilden des Hop-Zählers und/oder des Umleitungszählers in der SIP-Setup-Nachricht.

2. Verfahren nach Anspruch 1, wobei der Hop-Zähler und/oder der Umleitungszähler individuell in den jeweiligen Feldern der SIP-Setup-Nachricht abgebildet werden.

3. Verfahren nach Anspruch 1, wobei die IAM-Nachricht zum Tunneling durch das paketvermittelte Signalisierungsnetz in eine SIP-Nachricht eingekapselt wird.

4. Verfahren zum Übertragen von Signalisierinformationen von einem paketvermittelten Signalisierungsnetz, das eine SIP-Signalisierung verwendet, an ein Signalisierungsnetz SS7 über einen Medien-Gateway-Controller (MGC), umfassend:
Empfangen einer SIP-Setup-Nachricht von dem paketvermittelten Signalisierungsnetz an dem MGC, wobei die SIP-Setup-Nachricht einen Hop-Zähler und/oder einen Umleitungszähler aufweist, und
Erzeugen einer IAM für das SS7-Netz an dem MGC, wobei der Hop-Zähler und/oder der Umleitungszähler in der IAM aus der SIP-Setup-Nachricht abgebildet werden.

5. Telekommunikationsnetz umfassend:
ein erstes PSTN;
ein zweites PSTN;
ein IP-Netz in Kommunikation mit dem ersten PSTN und dem zweiten PSTN;
einen ersten MGC an der Schnittstelle zwischen dem ersten PSTN und dem IP-Netz; und
einen zweiten MGC an der Schnittstelle zwischen dem zweiten PSTN und dem IP-Netz,
wobei der erste und der zweite MGC Mittel zum Abbilden eines Hop-Zählers und/oder eines Umleitungszählers zwischen einer IAM des ersten PSTN's und einer SIP-Setup-Nachricht des IP-Netzes und das erste und zweite PSTN Mittel zum Löschen eines Rufaufbauverfahrens umfassen, wenn der Hop-Zähler Null erreicht oder der Umleitungszähler einen vorbestimmten Wert erreicht.

6. Verfahren nach einem der vorhergehenden Ansprüche, wobei das Signalisierungsnetz SS7 einen Teil eines öffentlichen Fernsprechwählnetzes (Public Switched Telephone Netzwerk - PSTN) bildet und das SIP-Signalisierungsnetz ein IP-Netz umfaßt.

7. Medien-Gateway-Controller (MGC) zum Übertragen von Daten zwischen einem Signalisierungsnetz SS7 und einem paketvermittelten Signalisierungsnetz, das eine SIP-Signalisierung verwendet, mit Mitteln zum Abbilden eines Hop-Zählers und/oder Umleitungszählers zwischen einer Belegungsnachricht des SS7-Netzes und einer SIP-Setup-Nachricht des paketvermittelten Signalisierungsnetzes.

## Revendications

1. Procédé de transfert d'informations de signalisation en provenance d'un réseau SS7 à un réseau de signalisation de commutation de paquets faisant appel à la signalisation SIP,le procédé consistant à :
recevoir un Message Adresse Initiale ISUP (IAM) du réseau SS7 au niveau d'un Contrôleur de Passerelle de Média (MGC), le IAM contenant un compteur de tronçons et/ou un compteur de redirection ; et
générer un message établir SIP au niveau du MGC, comprenant l'application du compteur de tronçons et/ou du compteur de redirection dans le message établir SIP.

2. Procédé selon la revendication 1, dans lequel le compteur de tronçons et/ou le compteur de redirection sont appliqués individuellement à des zones respectives du message établir SIP.

3. Procédé selon la revendication 1, dans lequel le message IAM est encapsulé dans un message SIP pour tunnelling à travers le réseau de signalisation de commutation de paquets.

4. Procédé de transfert d'informations à partir d'un réseau de signalisation de commutation de paquets recourant à la signalisation SIP à un réseau de signalisation SS7 via un Contrôleur de Passerelle de Média (MGC), le procédé consistant à :
recevoir un message établir SIP en provenance du réseau de signalisation de commutation de paquets au niveau du MGC, le message établir SIP contenant un compteur de tronçons et/ou un compteur de redirection ; et
générer un IAM pour le réseau SS7 au niveau du MGC, le compteur de tronçons et/ou le compteur de redirection compris dans le IAM étant appliqués à partir du message établir SIP.

5. Réseau de télécommunications, comprenant :
un premier PSTN ;
un second PSTN ;
un réseau IP en communication avec le premier PSTN et le second PSTN ;
un premier MGC à l'interface entre le premier PSTN et le réseau IP ; et
un second MGC à l'interface entre le second PSTN et le réseau IP,
dans lequel les premier et second MGC comprennent des moyens pour appliquer un compteur de tronçons et/ou un compteur de redirection entre un IAM du premier PSTN et un message établir SIP du réseau IP, et les premier et second PSTN comprennent des moyens pour annuler un processus d'établissement d'appel lorsque le compteur de tronçons atteint zéro ou lorsque le compteur de redirection excède une valeur prédéfinie.

6. Procédé selon l'une des revendications précédentes, dans lequel le réseau de signalisation SS7 fait partie d'un Réseau Commuté Public (PSTN) et le réseau de signalisation SIP comprend un réseau IP.

7. Contrôleur de Passerelle de Média (MGC) destiné au transfert de données entre un réseau de signalisation SS7 et un réseau de signalisation de commutation de paquets recourant à la signalisation SIP, comprenant des moyens pour appliquer un compteur de tronçons et/ou un compteur de redirection entre un Message Adresse Initiale du réseau SS7 et un message établir SIP du réseau de signalisation de commutation de paquets.
